# EUROPEAN PATENT SPECIFICATION

(11) **EP 4 174 989 B1**
(45) Date of publication and mention of the grant of the patent: **31.12.2025**
(21) Application number: 21852462.7
(22) Date of filing: 06.08.2021
(51) Int. Cl.: H01M 4/525, H01M 4/505, C01G 53/00, H01M 4/131, H01M 4/36, C01G 53/04, C01G 53/42, C01G 53/44, C01G 53/82, H01M 4/02

(54) **POSITIVE ELECTRODE ACTIVE MATERIAL PRECURSOR AND METHOD OF PREPARING SAME**
POSITIVELEKTRODENAKTIVMATERIALVORLÄUFER UND VERFAHREN ZUR HERSTELLUNG DAVON
PRÉCURSEUR DE MATÉRIAU ACTIF D'ÉLECTRODE POSITIVE ET SON PROCÉDÉ DE PRÉPARATION

(30) Priority: 06.08.2020 KR 20200098736
(43) Date of publication of application: 03.05.2023
(73) Proprietor: LG Chem, Ltd., Seoul 07336 (KR)
(72) Inventor: KIM, Na Ri, Daejeon 34122 (KR); PARK, Young Su, Daejeon 34122 (KR); KIM, Woo Hyun, Daejeon 34122 (KR); CHOI, Sang Soon, Daejeon 34122 (KR); CHAE, Hwa Seok, Daejeon 34122 (KR); KIM, Hyun Uk, Daejeon 34122 (KR); KIM, Dong Jin, Daejeon 34122 (KR); KANG, Dong Ryoung, Daejeon 34122 (KR)
(74) Representative: Hoffmann Eitle
(86) International application number: PCT/KR2021/010427
(87) International publication number: WO 2022/031116

(56) References cited:
- CN-A- 110 620 230
- KR-A- 20130 063 868
- KR-A- 20150 076 425
- KR-A- 20180 104 837
- KR-A- 20180 104 838
- KR-A- 20200 071 989
- KR-A- 20200 071 989
- KR-B1- 100 752 703

## Description

### TECHNICAL FIELD

The present invention relates to a positive electrode active material precursor having a novel structure and a method of preparing the same.

### BACKGROUND ART

Demand for secondary batteries as an energy source has been significantly increased as technology development and demand with respect to mobile devices and electric vehicles have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as LiCoO₂, having a high operating voltage and excellent capacity characteristics has been mainly used. However, the LiCoO₂ has poor thermal properties due to an unstable crystal structure caused by delithiation. Also, since the LiCoO₂ is expensive, there is a limitation in using a large amount of the LiCoO₂ as a power source for applications such as electric vehicles.

Lithium manganese-based oxides (LiMnO₂ or LiMn₂O₄), lithium iron phosphate compounds (LiFePO₄, etc.), or lithium nickel-based oxides (LiNiO₂, etc.) have been developed as materials for replacing the LiCoO₂. Among these materials, research and development of the lithium nickel-based oxides, in which a large capacity battery may be easily achieved due to a high reversible capacity of about 200 mAh/g, have been actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the LiNiO₂, a lithium composite transition metal oxide, in which a portion of nickel (Ni) is substituted with cobalt (Co), manganese (Mn), and/or aluminum (Al), has been developed.

Recently, as the demand for a high energy density secondary battery increases, a high-nickel lithium composite transition metal oxide having a high nickel content has been developed in order to increase capacity of the positive electrode active material. With respect to the high-nickel lithium composite transition metal oxide, it is advantageous in that large capacity is achieved, but, since an amount of oxidation of nickel is increased in the same voltage range due to the high nickel content, an amount of lithium ion movement is increased and structural stability of the positive electrode active material is reduced accordingly, and thus, it has a limitation in that long-term lifetime and thermal stability are degraded.

Therefore, there is a need to develop a positive electrode active material having excellent physical properties, such as life characteristics and thermal stability, as well as high capacity characteristics.

CN 110620230 A describes a positive electrode active material that comprises LiNixCoyMnzM1-x-y-zO2; the positive electrode active material comprises an inner core, a middle layer and an outer shell layer; in the inner core, 0.88≤x≤0.95, 0.02≤y≤0.1, and 0≤z≤0.1; in the middle layer, 0.8≤x≤0.88, 0.03≤y≤0.15, and 0≤z≤0.1; in the outer shell layer, 0.6≤x≤0.8, 0.1≤y≤0.3, and 0≤z≤0.3; M is independently selected from one or more components of Al³⁺, Zr⁴⁺, Mg²⁺, Ti⁴⁺, Ce⁴⁺ and Mo⁴⁺.

KR 2020-0071989 A describes a positive electrode active material for a lithium secondary battery having a core-shell-shell three-layered structure, in which a core part is formed of LiNiO₂, a shell part is formed of a Ni-rich-based three-component system, and another shell part is formed of a low Ni-based three-component system.

KR 2018-0104838 A describes a precursor for a positive electrode active material with a core-shell structure including a Ni-rich core part and a Mn-rich shell part.

### DISCLOSURE OF THE INVENTION

### TECHNICAL PROBLEM

An aspect of the present invention provides a positive electrode active material precursor having a novel structure which may achieve excellent capacity characteristics, life characteristics, and thermal stability, and a method of preparing the same.

### TECHNICAL SOLUTION

According to an aspect of the present invention, there is provided a positive electrode active material precursor which has a composition represented by Formula 1 or Formula 2 and includes a first region formed in a center of a particle of the positive electrode active material precursor, wherein a molar ratio of M¹ metal among total transition metals is 90 mol% or more; a second region formed on the first region, wherein a molar ratio of M² metal among total transition metals is 90 mol% or more; and a third region formed on the second region, wherein a molar ratio of M³ metal among total transition metals is 90 mol% or more.

[Formula 1] [M¹ₐM²_{b}M³_{c}M⁴_{d}](OH)₂

[Formula 2] [M¹ₐM²_{b}M³_{c}M⁴_{d}]O·OH

In [Formula 1] and [Formula 2], M¹, M², and M³ are each independently selected from the group consisting of nickel (Ni), cobalt (Co), and manganese (Mn), and M¹, M², and M³ are different from each other. For example, the M¹ metal may be Ni, the M² metal may be Co, and the M³ metal may be Mn, or the M¹ metal may be Ni, the M² metal may be Mn, and the M³ metal may be Co.

M⁴ may be at least one selected from the group consisting of boron (B), magnesium (Mg), calcium (Ca), aluminum (Al), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and may preferably be Al.

a, b, c, and d represent molar ratios of M¹, M², M³, and M⁴ in the positive electrode active material precursor, respectively, wherein a, b, c, and d satisfy 0<a<1, 0<b<1, 0<c<1, 0≤d<1, and a+b+c+d =1, a, b, c, and d may preferably satisfy 0.5≤a<1, 0<b<0.4, 0<c<0.4, and 0≤d<0.1, and a, b, c, and d may more preferably satisfy 0.6≤a<1, 0<b<0.3, 0<c<0.3, and 0≤d<0.1.

The positive electrode active material precursor may further include a fourth region which is formed on at least one of an interface between the first region and the second region, an interface between the second region and the third region, and the third region and includes M⁴ metal.

Also, the positive electrode active material precursor may include the M⁴ metal in at least one of the first region, the second region, and the third region.

According to another aspect of the present invention, there is provided a method of preparing the positive electrode active material precursor of the invention which includes: a first step of preparing a first metal solution containing M¹ metal among total metals in an amount of 90 mol% or more, a second metal solution containing M² metal among total transition metals in an amount of 90 mol% or more, and a third metal solution containing M³ metal among total transition metals in an amount of 90 mol% or more, respectively; a second step of forming a reaction solution by mixing the first metal solution, an ammonium cationic complexing agent, and a basic compound, and forming hydroxide or oxyhydroxide particles of the M¹ metal through a precipitation reaction; a third step of adding the second metal solution to a reaction solution including the hydroxide or oxyhydroxide particles of the M¹ metal, and forming hydroxide or oxyhydroxide particles of the M¹ metal and the M² metal through a precipitation reaction; and a fourth step of adding the third metal solution to a reaction solution including the hydroxide or oxyhydroxide particles of the M¹ metal and the M² metal, and forming hydroxide or oxyhydroxide particles of the M¹ metal, the M² metal, and the M³ metal through a precipitation reaction. In this case, M¹, M², and M³ are each independently selected from the group consisting of Ni, Co, and Mn, and M¹, M², and M³ are different from each other.

For example, the M¹ metal may be Ni, the M² metal may be Mn, and the M³ metal may be Co, and, in this case, a pH of the reaction solution in the second step may be in a range of 11.4 to 11.8, a pH of the reaction solution in the third step may be 11.0 or less, and a pH of the reaction solution in the fourth step may be in a range of 11.0 to 11.4.

In addition, the M¹ metal may be Ni, the M² metal may be Co, and the M³ metal may be Mn, and, in this case, a pH of the reaction solution in the second step may be in a range of 11.4 to 11.8, a pH of the reaction solution in the third step may be in a range of 11.0 to 11.4, and a pH of the reaction solution in the fourth step may be 11.0 or less.

At least one of the first metal solution, the second metal solution, and the third metal solution may contain M⁴ metal among total transition metals in an amount of 10 mol% or less, and, in this case, the M⁴ metal may be at least one selected from the group consisting of B, Mg, Ca, Al, Ti, V, Cr, Fe, Zn, Ga, Y, Zr, Nb, Mo, Ta, and W.

Also, the method of preparing a positive electrode active material precursor according to the present invention, if necessary, may further include a step of preparing a fourth metal solution containing M⁴ metal among total metals in an amount of 90 mol% or more, and a step of adding the fourth metal solution at least one of between the second step and the third step, between the third step and the fourth step, and after the fourth step to perform a precipitation reaction.

According to another aspect of the present invention, there is provided a positive electrode active material, which is a sintered product of a lithium raw material and the positive electrode active material precursor according to the present invention.

### ADVANTAGEOUS EFFECTS

Different from a conventional method of preparing a positive electrode active material precursor in which the positive electrode active material precursor is prepared by co-precipitating a single metal solution containing all of nickel (Ni), cobalt (Co), and manganese (Mn), in the present invention, after a first metal solution, a second metal solution, and a third metal solution, which include Ni, Co, and Mn, respectively, are prepared, the first to third metal solutions are sequentially added to perform a precipitation reaction, and thus, Ni, Co, and Mn are allowed to be respectively disposed in different regions in a particle.

Conventionally, methods of preparing a positive electrode active material precursor having a concentration gradient or a positive electrode active material precursor having a core-shell structure by using metal solutions having different amounts of nickel, cobalt, and manganese are known, but, with respect to these conventional methods, since the precursor was prepared by co-precipitating the nickel, the cobalt, and the manganese at the same time, it was not easy to control a reaction. In contrast, in the present invention, since the precipitation reaction is performed by adding the metal solutions respectively containing nickel, cobalt, and manganese with a time difference, reaction control is easy and a precursor composition may be variously adjusted, and thus, a positive electrode active material precursor optimized for desired properties may be prepared.

Also, since the positive electrode active material precursor prepared according to the method of the present invention has excellent orientation, it has excellent life characteristics as well as high capacity characteristics.

### BRIEF DESCRIPTION OF THE DRAWINGS

FIG. 1 is a view illustrating an embodiment of a positive electrode active material precursor according to the present invention; and
FIG. 2 a view illustrating other embodiments of the positive electrode active material precursor according to the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Positive Electrode Active Material Precursor

First, a positive electrode active material precursor according to the present invention will be described.

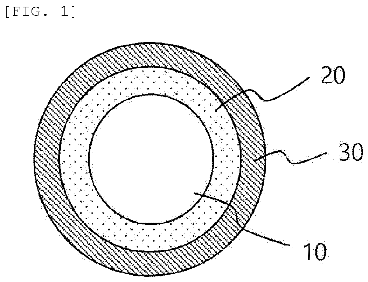

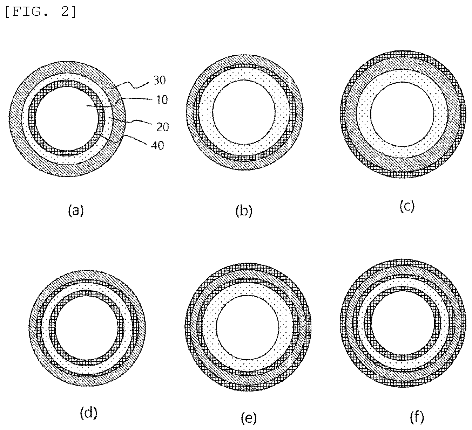

Various embodiments of the positive electrode active material precursor according to the present invention are illustrated in FIGS. 1 and 2. Hereinafter, the positive electrode active material precursor according to the present invention will be described with reference to the drawings.

As illustrated in FIG. 1, the positive electrode active material precursor according to an embodiment of the present invention includes a first region 10 formed in a center of a precursor particle, a second region 20 formed on the first region, and a third region 30 formed on the second region, wherein the first region 10, the second region 20, and the third region 30 include M¹ metal, M² metal, and M³ metal as a main component, respectively.

Specifically, in the positive electrode active material precursor according to the present invention, a molar ratio of the M¹ metal among total transition metals included in the first region 10 is 90 mol% or more, preferably 95 mol% or more, and more preferably 98 mol% or more, or 100 mol%, a molar ratio of the M² metal among total transition metals included in the second region 20 is 90 mol% or more, preferably 95 mol% or more, and more preferably 98 mol% or more, or 100 mol%, and a molar ratio of the M³ metal among total transition metals included in the third region 30 is 90 mol% or more, preferably 95 mol% or more, and more preferably 98 mol% or more, or 100 mol%.

In this case, M¹, M², and M³ are each independently a metallic element selected from the group consisting of nickel (Ni), cobalt (Co), and manganese (Mn), and M¹, M², and M³ are different from each other.

Preferably, the M¹ metal may be Ni, and the M² metal and the M³ metal may each independently be Mn or Co. Since Ni having excellent capacity characteristics is disposed in the first region formed in the center of the precursor particle and Mn or Co having better stability than Ni is disposed in the second region formed on the first region and the third region, a positive electrode active material precursor having both excellent high capacity characteristics and life characteristics may be obtained.

For example, in the positive electrode active material precursor of the present invention, the M¹ metal may be Ni, the M² metal may be Co, and the M³ metal may be Mn. As described above, in a case in which Mn is included as a main component in the third region formed on a surface portion of the precursor particle, an effect of further improving high-temperature life characteristics may be obtained due to the excellent thermal stability of Mn.

As another example, the M¹ metal may be Ni, the M² metal may be Mn, and the M³ metal may be Co. As described above, in a case in which Co is included as a main component in the third region formed on the surface portion of the precursor particle, an effect of further improving output characteristics may be obtained.

The positive electrode active material precursor of the present invention may further include M⁴ metal in at least one of the first region, the second region, and the third region.

In this case, the M⁴ metal is at least one selected from the group consisting of boron (B), magnesium (Mg), calcium (Ca), aluminum (Al), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and may preferably be Al.

The M⁴ metal among the total metals included in each region may be included in an amount of 10 mol% or less, for example, 0.01 mol% to 10 mol%, 0.05 mol% to 10 mol%, or 1 mol% to 5 mol%. When the amount of the M⁴ metal present in each region satisfies the above range, an effect of further improving structural stability of the positive electrode active material precursor may be obtained without adversely affecting the capacity characteristics and the life characteristics.

Other embodiments of the positive electrode active material precursor according to the present invention are illustrated in FIG. 2. As illustrated in FIG. 2, the positive electrode active material precursor according to the present invention may further include a fourth region 40 including M⁴ metal, as a main component, in addition to the first region 10, the second region 20, and the third region 30.

The M⁴ metal is at least one selected from the group consisting of B, Mg, Ca, Al, Ti, V, Cr, Fe, Zn, Ga, Y, Zr, Nb, Mo, Ta, and W, and may preferably be Al.

A formation position of the fourth region 40 is not particularly limited. Specifically, the fourth region 40 may be formed on an interface between the first region 10 and the second region 20 as illustrated in FIG. 2(a), may be formed on an interface between the second region 20 and the third region 30 as illustrated in FIG. 2(b), and may be formed on the third region 30 as illustrated in FIG. 2(c).

Also, as illustrated in FIGS. 2(d) to 2(f), the fourth region 40 may be formed in a plurality of regions, and, in this case, the M⁴ metals each included in each of the fourth regions 40 may be the same or different. Specifically, the fourth region may be formed on the interface between the first region and the second region and the interface between the second region and the third region as illustrated in FIG. 2(d), may be formed on the interface between the second region and the third region and the third region as illustrated in FIG. 2(e), and, although not shown, may also be formed on the interface between the first region and the second region and the third region. Furthermore, the fourth region may be formed on the interface between the first region and the second region, the interface between the second region and the third region, and the third region as illustrated in FIG. 2(f).

The positive electrode active material precursor according to the present invention may be a hydroxide in which an overall composition of the precursor particle is represented by the following Formula 1 or an oxyhydroxide in which an overall composition of the precursor particle is represented by the following Formula 2.

[Formula 1] [M¹ₐM²_{b}M³_{c}M⁴_{d}](OH)₂

[Formula 2] [M¹ₐM²_{b}M³_{c}M⁴_{d}]O·OH

In [Formula 1] and [Formula 2], M¹, M², and M³ are each independently selected from the group consisting of Ni, Co, and Mn, and M¹, M², and M³ are different from each other.

M⁴ is at least one selected from the group consisting of B, Mg, Ca, Al, Ti, V, Cr, Fe, Zn, Ga, Y, Zr, Nb, Mo, Ta, and W, and may preferably be Al.

a represents a molar ratio of M¹ metal among total metals in the positive electrode active material precursor, wherein a satisfies 0<a<1, preferably 0.5≤a<1, and more preferably 0.6≤a<1.

b represents a molar ratio of M² metal among the total metals in the positive electrode active material precursor, wherein b satisfies 0<b<1, preferably 0<b<0.4, and more preferably 0<b<0.3.

c represents a molar ratio of M³ metal among the total metals in the positive electrode active material precursor, wherein c satisfies 0<c<1, preferably 0<c<0.4, and more preferably 0<c<0.3.

d represents a molar ratio of M⁴ metal among the total metals in the positive electrode active material precursor, wherein d satisfies 0≤d<1, preferably 0≤d<0.1, and more preferably 0≤d<0.05.

According to the study of the present inventors, in a case in which nickel, cobalt, and manganese were respectively mainly distributed in different regions in the precursor particle as in the present invention, it was found that a crystalline size in a (100) crystal plane was increased because crystal growth in the (100) crystal plane was dominant in comparison to a conventional positive electrode active material precursor in which transition metals were mixed, and, when the crystalline size in the (100) crystal plane was increased, an effect of increasing mobility of lithium ions may be obtained.

Specifically, the positive electrode active material precursor according to the present invention may have a crystalline size in the (100) plane of 30 nm or more, preferably 30 nm to 100 nm, and more preferably 30 nm to 50 nm. Also, the positive electrode active material precursor according to the present invention may have a C₍₁₀₀₎/C₍₀₀₁₎, a ratio of the crystalline size (C₍₁₀₀₎) in the (100) crystal plane to a crystalline size (C₍₀₀₁₎) in a (001) crystal plane, of 3.0 to 6.0, for example, 3.5 to 6.0. Crystalline size is determined as set out in the examples.

In a case in which the crystalline size in the (100) crystal plane and the ratio of the crystalline size (C₍₁₀₀₎) in the (100) crystal plane to the crystalline size (C₍₀₀₁₎) in the (001) crystal plane satisfy the above ranges, the mobility of lithium ions may be improved, and, as a result, an effect of improving capacity characteristics and output characteristics may be obtained.

### Method of Preparing Positive Electrode Active Material Precursor

Next, a method of preparing the positive electrode active material precursor according to the present invention will be described.

The method of preparing a positive electrode active material precursor according to the present invention includes: (1) a first step of preparing a first metal solution containing M¹ metal, a second metal solution containing M² metal, and a third metal solution containing M³ metal, respectively, (2) a second step of forming a reaction solution by mixing the first metal solution, an ammonium cationic complexing agent, and a basic compound, and forming hydroxide or oxyhydroxide particles containing the M¹ metal through a precipitation reaction, (3) a third step of adding the second metal solution to a reaction solution including the hydroxide or oxyhydroxide particles of the M¹ metal, and precipitating hydroxide or oxyhydroxide particles of the M¹ metal and the M² metal through a precipitation reaction, and (4) a fourth step of adding the third metal solution to a reaction solution including the hydroxide or oxyhydroxide particles of the M¹ metal and the M² metal, and forming hydroxide or oxyhydroxide particles containing the M¹ metal, the M² metal, and the M³ metal through a precipitation reaction.

In this case, M¹, M², and M³ are the same as described above. That is, M¹, M², and M³ are each independently selected from the group consisting of Ni, Co, and Mn, and M¹, M², and M³ are different from each other.

Hereinafter, each step of the present invention will be described in detail.

### (1) First Step

First, a first metal solution containing M¹ metal, a second metal solution containing M² metal, and a third metal solution containing M³ metal are prepared, respectively.

In this case, the first metal solution contains the M¹ metal among total metals in the first metal solution in an amount of 90 mol% or more, preferably 95 mol% or more, and more preferably 98 mol% or more, or 100 mol%, and does not contain the M² metal and the M³ metal.

The second metal solution contains the M² metal among total metals in the second metal solution in an amount of 90 mol% or more, preferably 95 mol% or more, and more preferably 98 mol% or more, or 100 mol%, and does not contain the M¹ metal and the M³ metal.

The third metal solution contains the M³ metal among total metals in the third metal solution in an amount of 90 mol% or more, preferably 95 mol% or more, and more preferably 98 mol% or more, or 100 mol%, and does not contain the M¹ metal and the M² metal.

The first to third metal solutions may be prepared by respectively dissolving a M¹ metal-containing raw material, a M² metal-containing raw material, and a M³ metal-containing raw material in a solvent such as water.

In this case, the M¹ metal-containing raw material may be an acetic acid salt, carbonate, nitrate, sulfate, halide, sulfide, or oxide of the M¹ metal, the M² metal-containing raw material may be an acetic acid salt, carbonate, nitrate, sulfate, halide, sulfide, or oxide of the M² metal, and the M³ metal-containing raw material may be an acetic acid salt, carbonate, nitrate, sulfate, halide, sulfide, or oxide of the M³ metal.

In a case in which the M¹ metal is Ni, the M¹ metal-containing raw material, for example, may be NiO, NiCO₃·2Ni(OH)₂·4H₂O, NiC₂O₂·2H₂O, Ni(NO₃)₂·6H₂O, NiSO₄, NiSO₄·6H₂O, nickel halide, or a combination thereof, but the present invention is not limited thereto.

In a case in which the M² metal or the M³ metal is Mn, the M² metal-containing raw material or the M³ metal-containing raw material, for example, may be Mn₂O₃, MnO₂, Mn₃O₄, MnCO₃, Mn(NO₃)₂, MnSO₄·H₂O, manganese acetate, manganese halide, or a combination thereof, but the present invention is not limited thereto.

In a case in which the M² metal or the M³ metal is Co, the M² metal-containing raw material or the M³ metal-containing raw material, for example, may be CoSO₄, Co (OCOCH₃)₂·4H₂O, Co (NO₃)₂·6H₂O, CoSO₄·7H₂O, or a combination thereof, but the present invention is not limited thereto.

Although not essential, at least one of the first metal solution, the second metal solution, and the third metal solution may contain M⁴ metal.

In this case, the M⁴ metal may be at least one selected from the group consisting of B, Mg, Ca, Al, Ti, V, Cr, Fe, Zn, Ga, Y, Zr, Nb, Mo, Ta, and W, and may preferably be Al.

The metal solution further containing the M⁴ metal may be prepared by dissolving a M⁴ metal-containing raw material together with the M¹ metal-containing raw material, the M² metal-containing raw material, or the M³ metal-containing raw material in a solvent.

In this case, the M⁴ metal-containing raw material may be an acetic acid salt, carbonate, nitrate, sulfate, halide, sulfide, or oxide of the M⁴ metal, and the M⁴ metal among total metals in the metal solution may be included in an amount of 10 mol% or less, for example, 0.01 mol% to 10 mol%, 0.05 mol% to 10 mol%, or 1 mol% to 5 mol%.

### (2) Second Step

When the first metal solution, the second metal solution, and the third metal solution are prepared, the first metal solution, an ammonium cationic complexing agent, and a basic compound are mixed to form a reaction solution, and hydroxide or oxyhydroxide particles of the M¹ metal are formed through a precipitation reaction.

In this case, the ammonium cationic complexing agent may be at least one selected from the group consisting of NH₄OH, (NH₄)₂SO₄, NH₄NO₃, NH₄Cl, CH₃COONH₄, and (NH₄)₂CO₃, and may be added into a reactor in the form of a solution in which the above compound is dissolved in a solvent. In this case, water or a mixture of water and an organic solvent (specifically, alcohol etc.), which may be uniformly mixed with the water, may be used as the solvent.

The basic compound may be at least one selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

The ammonium cationic complexing agent and the basic compound are added in amounts such that a pH of the reaction solution is within a desired range.

The pH of the reaction solution may be adjusted to an appropriate range according to a type of a main metal component contained in the metal solution. For example, the pH of the reaction solution may be in a range of 11.4 to 11.8 when the M¹ metal is Ni, the pH of the reaction solution may be in a range of 11.0 to 11.4 when the M¹ metal is Co, and the pH of the reaction solution may be in a range of 11.0 or less when the M¹ metal is Mn. In a case in which the pH of the reaction solution according to the type of metal does not satisfy the above range, since the precipitation reaction may not be smoothly performed, the precipitation raw material may be dissolved or fine powder may be generated.

Preferably, the M¹ metal may be Ni, and, in this case, the ammonium cationic complexing agent and the basic compound may be added in amounts such that the pH of the reaction solution is in a range of 11.4 to 11.8.

### (3) Third Step

When the hydroxide or oxyhydroxide particles of the M¹ metal are sufficiently formed in the reaction solution through the second step, the supply of the first metal solution is stopped, the second metal solution containing the M² metal is added, and hydroxide or oxyhydroxide particles of the M¹ metal and the M² metal are formed by performing a precipitation reaction.

In this case, it is desirable to adjust a pH of the reaction solution by additionally adding an ammonium cationic complexing agent and a basic compound together with the second metal solution.

It is desirable that the pH of the reaction solution is adjusted to 11.4 to 11.8 when the M² metal is Ni, 11.0 to 11.4 when the M² metal is Co, and 11.0 or less when the M² metal is Mn.

For example, the M² metal may be Mn, and, in this case, the ammonium cationic complexing agent and the basic compound may be added in amounts such that the pH of the reaction solution is 11.0 or less.

As another example, the M² metal may be Co, and, in this case, the ammonium cationic complexing agent and the basic compound may be added in amounts such that the pH of the reaction solution is in a range of 11.0 to 11.4.

When the second metal solution is added and the pH of the reaction solution is appropriately adjusted, the hydroxide or oxyhydroxide particles of the M¹ metal and the M² metal are formed while the M² metal is precipitated on surfaces of the hydroxide or oxyhydroxide particles of the M¹ metal which are formed in the second step.

### (4) Fourth Step

When the hydroxide or oxyhydroxide particles of the M¹ metal and the M² metal are sufficiently formed in the reaction solution through the third step, the supply of the second metal solution is stopped, the third metal solution is added, and hydroxide or oxyhydroxide particles of the M¹ metal, the M² metal, and the M³ metal are formed by performing a precipitation reaction.

In this case, it is desirable to adjust a pH of the reaction solution by additionally adding an ammonium cationic complexing agent and a basic compound together with the third metal solution.

It is desirable that the pH of the reaction solution is adjusted to 11.4 to 11.8 when the M³ metal is Ni, 11.0 to 11.4 when the M³ metal is Co, and 11.0 or less when the M³ metal is Mn.

For example, the M³ metal may be Mn, and, in this case, the ammonium cationic complexing agent and the basic compound may be added in amounts such that the pH of the reaction solution is 11.0 or less.

As another example, the M³ metal may be Co, and, in this case, the ammonium cationic complexing agent and the basic compound may be added in amounts such that the pH of the reaction solution is in a range of 11.0 to 11.4.

When the third metal solution is added and the pH of the reaction solution is appropriately adjusted, the hydroxide or oxyhydroxide particles of the M¹ metal, the M² metal, and the M³ metal are formed while the M³ metal is precipitated on surfaces of the hydroxide or oxyhydroxide particles of the M¹ metal and the M² metal which are formed in the third step.

Through the above-described method, as illustrated in FIG. 1, the positive electrode active material precursor of the present invention having a structure, in which the M¹ metal, the M² metal, and the M³ metal are sequentially deposited, may be prepared.

### (5) Others

Although not essential, the method of preparing a positive electrode active material precursor may further include a step of preparing a fourth metal solution containing M⁴ metal and a step of adding the fourth metal solution to a reaction solution and performing a precipitation reaction.

The M⁴ metal may be at least one selected from the group consisting of B, Mg, Ca, Al, Ti, V, Cr, Fe, Zn, Ga, Y, Zr, Nb, Mo, Ta, and W, and may preferably be Al.

The fourth metal solution containing the M⁴ metal may be prepared by dissolving a M⁴ metal-containing raw material in a solvent such as water, and, in this case, the M⁴ metal-containing raw material may be an acetic acid salt, carbonate, nitrate, sulfate, halide, sulfide, or oxide containing the M⁴ metal. For example, the M⁴ metal-containing raw material may be NaAlO₂ or Al(NO₃)₃, but the present invention is not limited thereto.

The fourth metal solution contains the M⁴ metal among total metals in the fourth metal solution in an amount of 90 mol% or more, preferably 95 mol% or more, and more preferably 98 mol% or more, or 100 mol%, and does not contain the M¹ metal, the M² metal, and the M³ metal.

The fourth metal solution may be added at least one of between the second step and the third step, between the third step and the fourth step, and after the fourth step, and a cationic complexing agent and a basic compound may be added together for adjusting a pH of the reaction solution when the fourth metal solution is added. It is desirable that the pH of the reaction solution when the fourth metal solution is added is adjusted to 8 to 11.5. In a case in which the pH of the reaction solution does not satisfy the above range, since the precipitation reaction may not be smoothly performed, the precipitation raw material may be dissolved or fine powder may be generated.

When the fourth metal solution is added to the reaction solution, hydroxide or oxyhydroxide particles containing the M⁴ metal are formed while the M⁴ metal is precipitated on surfaces of the hydroxide or oxyhydroxide particles formed in the previous step.

In a case in which the fourth metal solution addition step as described above is additionally performed, a positive electrode active material precursor, in which the fourth region including the M⁴ metal is formed on the interface between the first region and the second region, the interface between the second region and the third region, or the third region, may be prepared as illustrated in (d) to (f) of the above-described FIG. 2.

### Positive Electrode Active Material

The positive electrode active material precursor of the present invention prepared by the above-described method may be mixed with a lithium raw material and then sintered to prepare a positive electrode active material of the invention.

The lithium raw material, for example, may include lithium-containing carbonates (e.g., lithium carbonate), hydrates (e.g., lithium hydroxide hydrate (LiOH·H₂O), etc.), hydroxides (e.g., lithium hydroxide, etc.), nitrates (e.g., lithium nitrate (LiNO₃), etc.), chlorides (e.g., lithium chloride (LiCl), etc.), and any one thereof or a mixture of two or more thereof may be used.

The mixing of the positive electrode active material precursor and the lithium raw material may be performed by solid phase mixing, and a mixing ratio of the positive electrode active material precursor to the lithium raw material may be determined in a range that satisfies an atomic fraction of each component in the finally-prepared positive electrode active material. For example, the positive electrode active material precursor and the lithium raw material may be mixed in amounts such that a molar ratio of transition metal : lithium (Li) is in a range of 1:0.9 to 1:1.2, for example, 1:0.98 to 1:1.1. In a case in which the precursor and the lithium raw material are mixed within the above range, a positive active material exhibiting excellent capacity characteristics may be prepared.

The sintering may be performed in a temperature range of 600°C to 1,000°C, for example, 700°C to 900°C, and sintering time may be in a range of 5 hours to 30 hours, for example, 8 hours to 15 hours, but the present invention is not limited thereto.

Next, a positive electrode according to the present invention will be described.

The positive electrode according to the present invention includes the above-described positive electrode active material of the present invention. Specifically, the positive electrode includes a positive electrode collector and a positive electrode active material layer formed on the positive electrode collector, wherein the positive electrode active material layer includes a positive electrode active material according to the present invention.

Since the positive electrode material has been described above, detailed descriptions thereof will be omitted, and the remaining configurations will be only described in detail below.

The positive electrode collector may include a metal having high conductivity, and is not particularly limited as long as it is easily adhered to the positive electrode active material layer, but has no reactivity in a voltage range of a battery. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder, if necessary, in addition to the positive electrode active material.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder, the conductive agent, and a dispersant, if necessary, in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), dimethylformamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Electrochemical Device

Next, an electrochemical device according to the present invention will be described. The electrochemical device according to the present invention includes the above-described positive electrode of the present invention, wherein the electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0 < β < 2), SnO₂, vanadium oxide, and lithium vanadium oxide; or a composite including the metallic compound and the carbonaceous material such as a Si-

C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers, carbon nanotubes, and metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be an anion of the lithium salt, and LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN (C₂F₅SO₂)₂, LiN (CF₃SO₂)₂, LiCl, LiI, or LiB (C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but are not limited thereto.

### PREFERRED MODE FOR CARRYING OUT THE INVENTION

Hereinafter, the present invention will be described in more detail, according to specific examples.

### Example 1

### (1) First Step

NiSO₄ was added to distilled water to prepare a first metal solution having a concentration of 2.4 M.

CoSO₄ was added to distilled water to prepare a second metal solution having a concentration of 2.4 M.

MnSO₄ was added to distilled water to prepare a third metal solution having a concentration of 2.4 M.

### (2) Second Step

After deionized water was put into a reactor, dissolved oxygen in the water was removed by purging the reactor with nitrogen gas to create a non-oxidizing atmosphere in the reactor. A 8.0 M NaOH solution and a 5.1 M NH₄OH aqueous solution were added to the reactor to prepare a reaction mother liquor with a pH of 12.0, and the first metal solution, a NaOH aqueous solution, and a NH₄OH aqueous solution were added at rates of 3.8 L/hr, 2.3 L/hr, and 0.54 L/hr, respectively, to perform a precipitation reaction for 28.8 hours. In this case, a pH of a reaction solution was maintained at 11.6.

### (3) Third Step

Thereafter, after the addition of the first metal solution was stopped and the pH of the reaction solution was adjusted to 11.4 by adding NaOH with a pH sensor being involved, the second metal solution, a NaOH aqueous solution, and a NH₄OH aqueous solution were added at rates of 3.8 L/hr, 2.3 L/hr, and 0.5 L/hr, respectively, to perform a precipitation reaction for 9.6 hours.

### (4) Fourth Step

Then, after the addition of the second metal solution was stopped and the pH of the reaction solution was adjusted to 10.8 to 11.0 by adding NaOH with a pH sensor being involved, the third metal solution, a NaOH aqueous solution, and a NH₄OH aqueous solution were added at rates of 3.8 L/hr, 2.3 L/hr, and 0.54 L/hr, respectively, and a precipitation reaction was performed for 9.6 hours to prepare a positive electrode active material precursor having a composition of [Ni_{0.6}Co_{0.2}Mn_{0.2}](OH)₂.

### Example 2

### (1) First Step

NiSO₄ was added to distilled water to prepare a first metal solution having a concentration of 2.4 M.

CoSO₄ was added to distilled water to prepare a second metal solution having a concentration of 2.4 M.

MnSO₄ was added to distilled water to prepare a third metal solution having a concentration of 2.4 M.

### (2) Second Step

After deionized water was put into a reactor, dissolved oxygen in the water was removed by purging the reactor with nitrogen gas to create a non-oxidizing atmosphere in the reactor. A 8.0 M NaOH solution and a 5.1 M NH₄OH aqueous solution were added to the reactor to prepare a reaction mother liquor with a pH of 12.0, and the first metal solution, a NaOH aqueous solution, and a NH₄OH aqueous solution were added at rates of 3.8 L/hr, 2.3 L/hr, and 0.54 L/hr, respectively, to perform a precipitation reaction for 43.2 hours. In this case, a pH of a reaction solution was maintained at 11.6.

### (3) Third Step

Thereafter, after the addition of the first metal solution was stopped and the pH of the reaction solution was adjusted to 11.4 by adding NaOH with a pH sensor being involved, the second metal solution, a NaOH aqueous solution, and a NH₄OH aqueous solution were added at rates of 3.8 L/hr, 2.3 L/hr, and 0.54 L/hr, respectively, to perform a precipitation reaction for 2.4 hours.

### (4) Fourth Step

Then, after the addition of the second metal solution was stopped and the pH of the reaction solution was adjusted to 10.8 to 11.0 by adding NaOH with a pH sensor being involved, the third metal solution, a NaOH aqueous solution, and a NH₄OH aqueous solution were added at rates of 3.8 L/hr, 2.3 L/hr, and 0.54 L/hr, respectively, and a precipitation reaction was performed for 2.4 hours to prepare a positive electrode active material precursor having a composition of [Ni_{0.9}Co_{0.05}Mn_{0.05}](OH)₂.

### Example 3

### (1) First Step

NiSO₄ was added to distilled water to prepare a first metal solution having a concentration of 2.4 M.

MnSO₄ was added to distilled water to prepare a second metal solution having a concentration of 2.4 M.

CoSO₄ was added to distilled water to prepare a third metal solution having a concentration of 2.4 M.

### (2) Second Step

After deionized water was put into a reactor, dissolved oxygen in the water was removed by purging the reactor with nitrogen gas to create a non-oxidizing atmosphere in the reactor. A 8.0 M NaOH solution and a 5.1 M NH₄OH aqueous solution were added to the reactor to prepare a reaction mother liquor with a pH of 12.0, and the first metal solution, a NaOH aqueous solution, and a NH₄OH aqueous solution were added at rates of 3.8 L/hr, 2.3 L/hr, and 0.54 L/hr, respectively, to perform a precipitation reaction for 43.2 hours. In this case, a pH of a reaction solution was maintained at 11.6.

### (3) Third Step

Thereafter, after the addition of the first metal solution was stopped and the pH of the reaction solution was adjusted to 10.8 to 11.0 by adding NaOH with a pH sensor being involved, the second metal solution, a NaOH aqueous solution, and a NH₄OH aqueous solution were added at rates of 3.8 L/hr, 2.3 L/hr, and 0.54 L/hr, respectively, to perform a precipitation reaction for 2.4 hours.

### (4) Fourth Step

Then, after the addition of the second metal solution was stopped and the pH of the reaction solution was adjusted to 11.4 by adding NaOH with a pH sensor being involved, the third metal solution, a NaOH aqueous solution, and a NH₄OH aqueous solution were added at rates of 3.8 L/hr, 2.3 L/hr, and 0.54 L/hr, respectively, and a precipitation reaction was performed for 2.4 hours to prepare a positive electrode active material precursor having a composition of [Ni_{0.9}Co_{0.05}Mn_{0.05}](OH)₂.

### Comparative Example 1

NiSO₄, CoSO₄, and MnSO₄ were mixed in distilled water in amounts such that a molar ratio of nickel:cobalt:manganese was 60:20:20 to prepare a metal solution having a concentration of 2.4 M.

After deionized water was put into a reactor, dissolved oxygen in the water was removed by purging the reactor with nitrogen gas to create a non-oxidizing atmosphere in the reactor. A 8.0 M NaOH solution and a 5.1 M NH₄OH aqueous solution were added to the reactor to prepare a reaction mother liquor, and, while a pH of a reaction solution was maintained at 11.5 to 11.7 by adding the metal solution, a NaOH aqueous solution, and a NH₄OH aqueous solution at rates of 3.8 L/hr, 2.3 L/hr, and 0.54 L/hr, respectively, a co-precipitation reaction was performed for 48 hours to prepare a positive electrode active material precursor having a composition of [Ni_{0.6}Co_{0.2}Mn_{0.2}](OH)₂.

### Comparative Example 2

NiSO₄, CoSO₄, and MnSO₄ were mixed in distilled water in amounts such that a molar ratio of nickel:cobalt:manganese was 90:5:5 to prepare a metal solution having a concentration of 2.4 M.

After deionized water was put into a reactor, dissolved oxygen in the water was removed by purging the reactor with nitrogen gas to create a non-oxidizing atmosphere in the reactor. A 8.0 M NaOH solution and a 5.1 M NH₄OH aqueous solution were added to the reactor to prepare a reaction mother liquor, and, while a pH of a reaction solution was maintained at 11.3 to 11.5 by adding the metal solution, a NaOH aqueous solution, and a NH₄OH aqueous solution at rates of 3.8 L/hr, 2.3 L/hr, and 0.54 L/hr, respectively, a co-precipitation reaction was performed for 48 hours to prepare a positive electrode active material precursor having a composition of [Ni_{0.9}Co_{0.05}Mn_{0.05}](OH)₂.

### Experimental Example 1

After sampling positive electrode active material precursor particles from the reaction solutions after the second step, the third step, and the fourth step during the preparation of the positive electrode active material precursors of Examples 1 to 3, concentrations (mol%) of nickel, cobalt, and manganese among transition metals in the positive electrode active material precursor particles were measured by inductively coupled plasma (ICP) analysis, and the results thereof are presented in [Table 1] below.

**[Table 1]**

| | Component (mol%) | Example 1 | Example 2 | Example 3 |
|---|---|---|---|---|
| Second step | Ni | 100 | 100 | 100 |
| | Co | 0 | 0 | 0 |
| | Mn | 0 | 0 | 0 |
| Third step | Ni | 75.2 | 94.5 | 94.7 |
| | Co | 24.8 | 5.5 | 0 |
| | Mn | 0 | 0 | 5.3 |
| Fourth step | Ni | 59.9 | 89.6 | 90.1 |
| | Co | 19.8 | 5.2 | 5.0 |
| | Mn | 20.3 | 5.2 | 4.9 |

It may be confirmed that each metal layer of the positive electrode active material precursors of Examples 1 to 3 was formed to have a desired composition by measuring the metal composition for each step as illustrated in [Table 1].

### Experimental Example 2

Scanning electron microscope-energy dispersive X-ray spectroscopy (SEM-EDS) analysis (S-4800, Hitachi Group) was performed to confirm a metallic element distribution of the positive electrode active material precursors prepared in Example 1 and Comparative Example 1, and the results thereof are presented in [Table 2] below.

In this case, when a particle radius in a cross-sectional SEM image of the precursor particle was R, the metallic element distribution in a first region of Example 1 was a measurement of transition metal content at a particle center, the metallic element distribution in a second region was a measurement of transition metal content at a distance of 0.88 R from the particle center, and the metallic element distribution in a third region was a measurement of transition metal content on a particle surface.

**[Table 2]**

| | Example 1 (mol%) | | | Comparative Example 1 (mol%) | |
|---|---|---|---|---|---|
| | First region | Second region | Third region | Center | Surface |
| Ni | 100 | 0.6 | 0 | 60.5 | 59.9 |
| Co | 0 | 98.4 | 0.5 | 19.8 | 20.1 |

| | | | | | |
|---|---|---|---|---|---|
| Mn | 0 | 1.0 | 99.5 | 19.7 | 20.0 |

Through [Table 2], with respect to the positive electrode active material precursor of Example 1, it may be confirmed that Ni, Co, and Mn were mainly disposed in the first region, the second region, and the third region, respectively, but Ni, Co, and Mn were mixed and disposed in the entire particle of the positive electrode active material precursor of Comparative Example 1.

### Experimental Example 3

After measuring X-ray diffraction (XRD) patterns of the positive electrode active material precursor particles prepared in Examples 2 and 3 and Comparative Example 2 using an X-ray diffractometer (Rigaku Corporation), half-value widths of peaks of a (100) plane and a (001) plane were obtained from the measured XRD pattern, and a crystalline size in each crystal plane was calculated using the Scherrer equation. Measurement results are presented in Table 3 below.

In this case, the half-value width of the peak of the (100) crystal plane was a half-value width of a peak appearing in a region where 2θ = 33.1±0.2°, and the half-value width of the peak of the (001) crystal plane was a half-value width of a peak appearing in a region where 2θ = 19.1±0.2°.

**[Table 3]**

| | Crystal plane | Example 2 | Example 3 | Comparative Example 2 |
|---|---|---|---|---|
| Crystalline size (nm) | (100) | 39.4 | 33.3 | 28.5 |
| | (001) | 7.71 | 8.42 | 11.5 |
| Crystalline size ratio | (100) / (001) | 5.1 | 4.0 | 2.5 |

Through [Table 3], with respect to the positive electrode active material precursors prepared in Examples 2 and 3, it may be confirmed that crystal growth on the (100) crystal plane was dominant in comparison to the positive electrode active material precursor prepared in Comparative Example 2.

### Experimental Example 4

Each of the positive electrode active material precursors prepared in Examples 1 and 2 and Comparative Example 1 and LiOH·H₂O were mixed such that a molar ratio of Li : transition metals was 1.05 : 1, and sintered at 805°C for 13 hours in an oxygen atmosphere to prepare each positive electrode active material.

Also, the positive electrode active material precursor prepared in Comparative Example 2 and LiOH·H₂O were mixed such that a molar ratio of Li : transition metals was 1.05 : 1, and sintered at 765°C for 13 hours in an oxygen atmosphere to prepare a positive electrode active material.

Each of the positive electrode active materials prepared by the above-described method, a conductive agent (carbon black), and a binder (PVdF) were mixed in a N-methyl-2-pyrrolidone (NMP) solvent in a weight ratio of 97.5 : 1 : 1.5 to prepare a positive electrode slurry. One surface of an aluminum current collector was coated with the positive electrode slurry, dried at 130°C, and then rolled to prepare each positive electrode.

Each 2032 coin cell type lithium secondary battery was prepared by preparing an electrode assembly by disposing a separator between each of the positive electrodes prepared as described above and a negative electrode, disposing the electrode assembly in a battery case, and then injecting an electrolyte solution into the battery case.

In this case, a Li metal disk was used as the negative electrode, and, as the electrolyte solution, an electrolyte solution, in which 1 M LiPF₆ was dissolved in an organic solvent in which ethylene carbonate : ethyl methyl carbonate : diethyl carbonate were mixed in a volume ratio of 3 : 3 : 4, was used.

Each of the lithium secondary batteries prepared as described above was charged at a constant current of 0.1 C to 4.25 V in a constant current/constant voltage (CC/CV) mode at 25°C and then was discharged to 3 V in a CC mode to measure initial charge capacity and discharge capacity. Measurement results are presented in Table 4 below.

**[Table 4]**

| | Charge capacity (mAh/g) | Discharge capacity (mAh/g) |
|---|---|---|
| Example 1 | 194 | 178 |
| Comparative Example 1 | 190 | 175 |
| Example 2 | 241 | 221 |
| Comparative Example 2 | 236 | 217 |

Through [Table 4], in a case in which the positive electrode active material precursors of Examples 1 and 2 having a structure, in which Ni, Co, and Mn were respectively disposed in different regions as in the present invention, were used, it may be understood that better initial capacities were achieved than a case where the positive electrode active material precursors of Comparative Examples 1 and 2, in which an average composition was the same, but Ni, Co, and Mn were mixed and disposed, were used.

### <Description of the Symbols>

- 10:: First Region
- 20:: Second Region

## Claims

1. A positive electrode active material precursor having a composition represented by Formula 1 or Formula 2 and comprising:
a first region formed in a center of a particle of the positive electrode active material precursor, wherein a molar ratio of M¹ metal among total transition metals is 90 mol% or more;
a second region formed on the first region, wherein a molar ratio of M² metal among total transition metals is 90 mol% or more; and
a third region formed on the second region, wherein a molar ratio of M³ metal among total transition metals is 90 mol% or more:
[Formula 1] [M¹ₐM²_{b}M³_{c}M⁴_{d}] (OH)₂
[Formula 2] [M¹ₐM²_{b}M³_{c}M⁴_{d}]O·OH
wherein, in [Formula 1] and [Formula 2],
M¹, M², and M³ are each independently selected from the group consisting of Ni, Co, and Mn, wherein M¹, M², and M³ are different from each other,
M⁴ is at least one selected from the group consisting of B, Mg, Ca, Al, Ti, V, Cr, Fe, Zn, Ga, Y, Zr, Nb, Mo, Ta, and W, and
0<a<1, 0<b<1, 0<c<1, 0≤d<1, and a+b+c+d =1.

2. The positive electrode active material precursor of claim 1, further comprising a fourth region which is formed on at least one of an interface between the first region and the second region, an interface between the second region and the third region, and the third region and includes the M⁴ metal.

3. The positive electrode active material precursor of claim 1, wherein the M⁴ metal is included in at least one of the first region, the second region, and the third region.

4. The positive electrode active material precursor of claim 1, wherein, in [Formula 1] and [Formula 2], 0.5≤a<1, 0<b<0.4, 0<c<0.4, and 0≤d<0.1.

5. The positive electrode active material precursor of claim 1, wherein the M¹ metal is Ni, the M² metal is Mn, and the M³ metal is Co.

6. The positive electrode active material precursor of claim 1, wherein the M¹ metal is Ni, the M² metal is Co, and the M³ metal is Mn.

7. The positive electrode active material precursor of claim 1, wherein the M⁴ metal is Al.

8. The positive electrode active material precursor of claim 1, wherein a crystalline size in a (100) crystal plane of the positive electrode active material precursor is 30 nm or more, wherein crystalline size is determined using an X-ray diffractometer in which half-value widths of peaks of a (100) plane are obtained from the measured XRD pattern, and crystalline size is calculated using the Scherrer equation.

9. The positive electrode active material precursor of claim 1, wherein C₍₁₀₀₎/C₍₀₀₁₎, a ratio of a crystalline size (C₍₁₀₀₎) in a (100) crystal plane to a crystalline size (C₍₀₀₁₎) in a (001) crystal plane, is in a range of 3.5 to 6.0, wherein crystalline size is determined using an X-ray diffractometer in which half-value widths of peaks of a (100) plane and a (001) plane are obtained from the measured XRD pattern, and crystalline size in each crystal plane is calculated using the Scherrer equation.

10. A method of preparing the positive electrode active material precursor according to any one of claims 1 to 9, the method comprising:
a first step of preparing a first metal solution containing M¹ metal among total metals in an amount of 90 mol% or more, a second metal solution containing M² metal among total metals in an amount of 90 mol% or more, and a third metal solution containing M³ metal among total metals in an amount of 90 mol% or more, respectively;
a second step of forming a reaction solution by mixing the first metal solution, an ammonium cationic complexing agent, and a basic compound, and forming hydroxide or oxyhydroxide particles of the M¹ metal through a precipitation reaction;
a third step of adding the second metal solution to a reaction solution including the hydroxide or oxyhydroxide particles of the M¹ metal, and forming hydroxide or oxyhydroxide particles of the M¹ metal and the M² metal through a precipitation reaction; and
a fourth step of adding the third metal solution to a reaction solution including the hydroxide or oxyhydroxide particles of the M¹ metal and the M² metal, and forming hydroxide or oxyhydroxide particles of the M¹ metal, the M² metal, and the M³ metal through a precipitation reaction,
wherein M¹, M², and M³ are each independently selected from the group consisting of Ni, Co, and Mn, and M¹, M², and M³ are different from each other.

11. The method of claim 10, further comprising a step of preparing a fourth metal solution containing M⁴ metal among total metals in an amount of 90 mol% or more, and
a step of adding the fourth metal solution at least one of between the second step and the third step, between the third step and the fourth step, and after the fourth step to perform a precipitation reaction,
wherein the M⁴ metal is at least one selected from the group consisting of B, Mg, Ca, Al, Ti, V, Cr, Fe, Zn, Ga, Y, Zr, Nb, Mo, Ta, and W.

12. The method of claim 10, wherein at least one of the first metal solution, the second metal solution, and the third metal solution comprises M⁴ metal among total transition metals in an amount of 10 mol% or less,
wherein the M⁴ metal is at least one selected from the group consisting of B, Mg, Ca, Al, Ti, V, Cr, Fe, Zn, Ga, Y, Zr, Nb, Mo, Ta, and W.

13. The method of claim 10, wherein the M¹ metal is Ni, the M² metal is Mn, and the M² metal is Co,
wherein a pH of the reaction solution in the second step is in a range of 11.4 to 11.8,
a pH of the reaction solution in the third step is 11.0 or less, and
a pH of the reaction solution in the fourth step is in a range of 11.0 to 11.4.

14. The method of claim 10, wherein the M¹ metal is Ni, the M² metal is Co, and the M³ metal is Mn,
wherein a pH of the reaction solution in the second step is in a range of 11.4 to 11.8,
a pH of the reaction solution in the third step is in a range of 11.0 to 11.4, and
a pH of the reaction solution in the fourth step is 11.0 or less.

15. A positive electrode active material, which is a sintered product of a lithium raw material and the positive electrode active material precursor of any one of claims 1 to 9.

## Patentansprüche

1. Positivelektroden-Aktivmaterialvorläufer mit einer durch die Formel 1 oder Formel 2 dargestellten Zusammensetzung und umfassend:
einen ersten Bereich, der im Zentrum eines Partikels des Positivelektroden-Aktivmaterialvorläufers gebildet ist, worin der molare Anteil eines M¹-Metalls unter den gesamten Übergangsmetallen 90 mol-% oder mehr beträgt;
einen zweiten Bereich, der auf dem ersten Bereich gebildet ist, worin der molare Anteil eines M²-Metalls unter den gesamten Übergangsmetallen 90 mol-% oder mehr beträgt; und
einen dritten Bereich, der auf dem zweiten Bereich gebildet ist, worin der molare Anteil eine M³-Metalls unter den gesamten Übergangsmetallen 90 mol-% oder mehr ist:
[Formel 1] [M¹ₐM²_{b}M³_{c}M⁴_{d}] (OH)₂
[Formel 2] [M¹ₐM²_{b}M³_{c}M⁴_{d}]O·OH
worin in [Formel 1] und [Formel 2]
M¹, M² und M³ jeweils unabhängig ausgewählt sind aus der Gruppe, bestehend aus Ni, Co und Mn, worin M¹, M² und M³ sich voneinander unterscheiden,
M⁴ zumindest eines ist, ausgewählt aus der Gruppe bestehend aus B, Mg, Ca, Al, Ti, V, Cr, Fe, Zn, Ga, Y, Zr, Nb, Mo, Ta und W, und
0<a<1, 0<b<1, 0<c<1, 0≤d<1 und a+b+c+d = 1.

2. Positivelektroden-Aktivmaterialvorläufer gemäß Anspruch 1, ferner umfassend einen vierten Bereich, der auf zumindest einem von der Grenzfläche zwischen dem ersten Bereich und dem zweiten Bereich, einer Grenzfläche zwischen dem zweiten Bereich und dem dritten Bereich, und dem dritten Bereich gebildet ist und das M⁴-Metall umfasst.

3. Positivelektroden-Aktivmaterialvorläufer gemäß Anspruch 1, worin das M⁴-Metall in zumindest einem von dem ersten Bereich, dem zweiten Bereich und dem dritten Bereich enthalten ist.

4. Positivelektroden-Aktivmaterialvorläufer gemäß Anspruch 1, worin in [Formel 1] und [Formel 2] 0,5≤a<1, 0<b<0,4, 0<c<0,4 und 0≤d<0,1.

5. Positivelektroden-Aktivmaterialvorläufer gemäß Anspruch 1, worin das M¹-Metall Ni ist, das M²-Metall Mn ist und das M³-Material Co ist.

6. Positivelektroden-Aktivmaterialvorläufer gemäß Anspruch 1, worin das M¹-Metall Ni ist, das M²-Metall Co ist und das M³-Metall Mn ist.

7. Positivelektroden-Aktivmaterialvorläufer gemäß Anspruch 1, worin das M⁴-Metall Al ist.

8. Positivelektroden-Aktivmaterialvorläufer gemäß Anspruch 1, worin eine kristalline Größe in der (100)-Kristallebene des Positivelektroden-Aktivmaterialvorläufers 30 nm oder größer ist, worin die kristalline Größe unter Verwendung eines Röntgendiffraktometers bestimmt wird, worin die Halbwertsbreite von Peaks der (100)-Ebene aus dem gemessenen Röntgenmuster erhalten wird und die kristalline Größe unter Verwendung der Scherrer-Gleichung berechnet wird.

9. Positivelektroden-Aktivmaterialvorläufer gemäß Anspruch 1 worin C₍₁₀₀₎/C₍₁₀₁₎, das Verhältnis der kristallinen Größe (C₍₁₀₀₎) in der (100)-Kristallebene zur kristallinen Größe (C₍₁₀₁₎) in der (001)-Kristallebene, im Bereich von 3,5 bis 6,0 liegt, worin die kristalline Größe unter Verwendung eines Röntgendiffraktometers bestimmt wird, worin die Halbwertsbreite von Peaks der (100)-Ebene und der (001)-Ebene aus dem gemessenen XRD-Muster erhalten werden und die kristalline Größe in jeder Kristallebene unter Verwendung der Scherrer-Gleichung berechnet wird.

10. Verfahren zur Herstellung des Positivelektroden-Aktivmaterialvorläufers gemäß irgendeinem der Ansprüche 1 bis 9, wobei das Verfahren umfasst:
einen ersten Schritt zum Zubereiten einer ersten Metalllösung, die M¹-Metall in einer Menge von 90 mol-% oder mehr unter den gesamten Metallen enthält, einer zweiten Metalllösung, die M²-Metall in einer Menge von 90 mol-% oder mehr unter den gesamten Metallen enthält, und einer dritten Metalllösung, die M³-Metall in einer Menge von 90 mol-% oder mehr unter den gesamten Metallen enthält;
einen zweiten Schritt zum Bilden einer Reaktionslösung durch Mischen der ersten Metalllösung, eines kationischen Ammonium-Komplexiermittels und einer basischen Verbindung, und Bilden von Hydroxid- oder Oxyhydroxid-Partikeln des M¹-Metalls durch eine Ausfällungsreaktion;
einen dritten Schritt zum Zugeben der zweiten Metalllösung zu einer Reaktionslösung, die die Hydroxid-oder Oxyhydroxid-Partikel des M¹-Metalls umfasst, und Bilden von Hydroxid- oder Oxyhydroxid-Partikeln des M¹-Metalls und des M²-Metalls durch eine Ausfällungsreaktion; und
einen vierten Schritt zum Zugeben der dritten Metalllösung zu einer Reaktionslösung, die die Hydroxid-oder Oxyhydroxid-Partikel des M¹-Metalls und des M²-Metalls umfasst, und Bilden von Hydroxid- oder Oxyhydroxid-Partikeln des M¹-Metalls, des M²-Metalls und des M³-Metalls durch eine Ausfällungsreaktion,
worin M¹, M² und M³ jeweils unabhängig ausgewählt sind aus der Gruppe, bestehend aus Ni, Co und Mn, und M¹, M² und M³ voneinander verschieden sind.

11. Verfahren gemäß Anspruch 10, ferner umfassend einen Schritt zum Zubereiten einer vierten Metalllösung, die M⁴-Metall in einer Menge von 90 mol-% oder mehr unter den gesamten Metallen enthält, und
einen Schritt zum Zugeben der vierten Metalllösung in zumindest einem Schritt zwischen dem zweiten Schritt und dem dritten Schritt, zwischen dem dritten Schritt und dem vierten Schritt, und nach dem vierten Schritt, um eine Ausfällungsreaktion durchzuführen,
worin das M⁴-Metall zumindest eines ist, ausgewählt aus der Gruppe bestehend aus B, Mg, Ca, Al, Ti, V, Cr, Fe, Zn, Ga, Y, Zr, Nb, Mo, Ta und W.

12. Verfahren gemäß Anspruch 10, worin zumindest eine von der ersten Metalllösung, der zweiten Metalllösung und der dritten Metalllösung M⁴-Metall in einer Menge von 10 mol-% oder weniger unter den gesamten Übergangsmetallen umfasst,
worin das M⁴-Metall zumindest eines ist, ausgewählt aus der Gruppe bestehend aus B, Mg, Ca, Al, Ti, V, Cr, Fe, Zn, Ga, Y, Zr, Nb, Mo, Ta und W.

13. Verfahren gemäß Anspruch 10, worin das M¹-Metall Ni ist, das M²-Metall Mn ist und das M³-Metall Co ist,
worin der pH-Wert der Reaktionslösung im zweiten Schritt im Bereich von 11,4 bis 11,8 liegt,
der pH-Wert der Reaktionslösung im dritten Schritt bei 11,0 oder niedriger liegt, und
der pH-Wert der Reaktionslösung im vierten Schritt im Bereich von 11,0 bis 11,4 liegt.

14. Verfahren gemäß Anspruch 10, worin das M¹-Metall Ni ist, das M²-Metall Co ist und das M³-Metall Mn ist,
worin der pH-Wert der Reaktionslösung im zweiten Schritt im Bereich von 11,4 bis 11,8 liegt,
der pH-Wert der Reaktionslösung im dritten Schritt im Bereich von 11,0 bis 11,4 liegt, und
der pH-Wert der Reaktionslösung im vierten Schritt 11,0 oder niedriger ist.

15. Positivelektroden-Aktivmaterial, welches ein gesintertes Produkt eines Lithium-Ausgangsmaterials und des Positivelektroden-Aktivmaterialvorläufers gemäß irgendeinem der Ansprüche 1 bis 9 ist.

## Revendications

1. Précurseur de matériau actif d'électrode positive ayant une composition représentée par la formule 1 ou la formule 2 et comprenant :
une première région formée au centre d'une particule du précurseur de matériau actif d'électrode positive, dans laquelle le rapport molaire du métal M¹ parmi l'ensemble des métaux de transition est de 90 % en moles ou plus ;
une deuxième région formée sur la première région, dans laquelle le rapport molaire du métal M² parmi l'ensemble des métaux de transition est de 90 % en moles ou plus ; et
une troisième région formée sur la deuxième région, dans laquelle le rapport molaire du métal M³ parmi l'ensemble des métaux de transition est de 90 % en moles ou plus :
[Formule 1] [M¹ₐM²_{b}M³_{c}M⁴_{d}](OH)₂
[Formule 2] [M¹ₐM²_{b}M³_{c}M⁴_{d}]O·OH
dans lesquelles, dans la [Formule 1] et la [Formule 2],
M¹, M² et M³ sont chacun indépendamment choisis dans le groupe constitué par Ni, Co et Mn, dans lequel M¹, M² et M³ sont différents les uns des autres,
M⁴ est au moins un élément choisi dans le groupe constitué par B, Mg, Ca, Al, Ti, V, Cr, Fe, Zn, Ga, Y, Zr, Nb, Mo, Ta et W, et
0<a<1, 0<b<1, 0<c<1, 0≤d<1, et a+b+c+d =1.

2. Le précurseur de matériau actif d'électrode positive selon la revendication 1, comprenant en outre une quatrième région qui est formée sur au moins l'une parmi une interface entre la première région et la deuxième région, une interface entre la deuxième région et la troisième région, et la troisième région, et qui comprend le métal M⁴.

3. Le précurseur de matériau actif d'électrode positive selon la revendication 1, dans lequel le métal M⁴ est inclus dans au moins l'une parmi la première région, la deuxième région et la troisième région.

4. Le précurseur de matériau actif d'électrode positive selon la revendication 1, dans lequel, dans la [Formule 1] et la [Formule 2], 0,5 ≤ a < 1, 0 < b < 0,4, 0 < c < 0,4 et 0 ≤ d < 0,1.

5. Le précurseur de matériau actif pour électrode positive selon la revendication 1, dans lequel le métal M¹ est Ni, le métal M² est Mn et le métal M³ est Co.

6. Le précurseur de matériau actif pour électrode positive selon la revendication 1, dans lequel le métal M¹ est Ni, le métal M² est Co et le métal M³ est Mn.

7. Le précurseur de matériau actif pour électrode positive selon la revendication 1, dans lequel le métal M⁴ est Al.

8. Le précurseur de matériau actif pour électrode positive selon la revendication 1, dans lequel la taille cristalline dans un plan cristallin (100) du précurseur de matériau actif pour électrode positive est de 30 nm ou plus, la taille cristalline étant déterminée à l'aide d'un diffractomètre à rayons X dans lequel les largeurs à mi-hauteur des pics d'un plan (100) sont obtenues à partir du diagramme XRD mesuré, et la taille cristalline étant calculée à l'aide de l'équation de Scherrer.

9. Le précurseur de matériau actif d'électrode positive selon la revendication 1, dans lequel C(100)/C(001), un rapport entre une taille cristalline (C(100)) dans un plan cristallin (100) et une taille cristalline (C(001)) dans un (001), est dans un domaine de 3,5 à 6,0, la taille cristalline étant déterminée à l'aide d'un diffractomètre à rayons X dans lequel les largeurs à mi-hauteur des pics d'un plan (100) et d'un plan (001) sont obtenues à partir du diagramme XRD mesuré, et la taille cristalline dans chaque plan cristallin est calculée à l'aide de l'équation de Scherrer.

10. Procédé de préparation du précurseur de matière active d'électrode positive selon l'une quelconque des revendications 1 à 9, le procédé comprenant :
une première étape consistant à préparer une première solution métallique contenant le métal M1 parmi les métaux totaux en une quantité de 90 % en moles ou plus, une deuxième solution métallique contenant le métal M² parmi les métaux totaux en une quantité de 90 % en moles ou plus, et une troisième solution métallique contenant le métal M³ parmi les métaux totaux en une quantité de 90 % en moles ou plus, respectivement ;
une deuxième étape consistant à former une solution réactionnelle en mélangeant la première solution métallique, un agent complexant cationique ammonium et un composé basique, et à former des particules d'hydroxyde ou d'oxyhydroxyde du métal M¹ par une réaction de précipitation ;
une troisième étape consistant à ajouter la deuxième solution métallique à une solution réactionnelle comprenant les particules d'hydroxyde ou d'oxyhydroxyde du métal M¹, et à former des particules d'hydroxyde ou d'oxyhydroxyde du métal M¹ et du métal M² par une réaction de précipitation ; et
une quatrième étape consistant à ajouter la troisième solution métallique à une solution réactionnelle comprenant les particules d'hydroxyde ou d'oxyhydroxyde du métal M¹ et du métal M², et la formation de particules d'hydroxyde ou d'oxyhydroxyde du métal M1, du métal M² et du métal M³ par une réaction de précipitation,
dans laquelle M¹, M² et M³ sont chacun indépendamment choisis dans le groupe constitué par Ni, Co et Mn, et M¹, M² et M³ sont différents les uns des autres.

11. Le procédé selon la revendication 10, comprenant en outre une étape de préparation d'une quatrième solution métallique contenant le métal M⁴ parmi l'ensemble des métaux en une quantité de 90 % en moles ou plus, et une étape d'ajout de la quatrième solution métallique au moins entre la deuxième étape et la troisième étape, entre la troisième étape et la quatrième étape, et après la quatrième étape pour effectuer une réaction de précipitation,
dans lequel le métal M⁴ est au moins un métal choisi dans le groupe constitué par B, Mg, Ca, Al, Ti, V, Cr, Fe, Zn, Ga, Y, Zr, Nb, Mo, Ta et W.

12. Le procédé selon la revendication 10, dans lequel au moins l'une parmi la première solution métallique, la deuxième solution métallique et la troisième solution métallique comprend le métal M⁴ parmi l'ensemble des métaux de transition en une quantité de 10 % en moles ou moins,
dans lequel le métal M⁴ est au moins un métal choisi parmi le groupe constitué de B, Mg, Ca, Al, Ti, V, Cr, Fe, Zn, Ga, Y, Zr, Nb, Mo, Ta et W.

13. Le procédé selon la revendication 10, dans lequel le métal M¹ est Ni, le métal M² est Mn et le métal M³ est Co,
dans lequel le pH de la solution réactionnelle dans la deuxième étape est dans un domaine de 11,4 à 11,8,
le pH de la solution réactionnelle dans la troisième étape est inférieur ou égal à 11,0, et
le pH de la solution réactionnelle dans la quatrième étape est dans un domaine de 11,0 à 11,4.

14. Le procédé selon la revendication 10, dans lequel le métal M¹ est le Ni, le métal M² est le Co et le métal M³ est le Mn,
dans lequel le pH de la solution réactionnelle dans la deuxième étape est dans un domaine 11,4 à 11,8,
le pH de la solution réactionnelle dans la troisième étape est dans un domaine 11,0 à 11,4, et
le pH de la solution réactionnelle dans la quatrième étape est inférieur ou égal à 11,0.

15. Matériau actif d'électrode positive, qui est un produit fritté d'une matière première à base de lithium et du précurseur de matériau actif d'électrode positive de l'une quelconque des revendications 1 à 9.
